# EUROPEAN PATENT APPLICATION

(11) **EP 2 423 062 A2**
(43) Date of publication of application: **29.02.2012**
(21) Application number: 11178683.6
(22) Date of filing: 24.08.2011
(51) Int. Cl.: B60T 13/74, B60T 17/16, F16D 65/14, F16D 65/28

(54) **A parking brake mechanism**

(30) Priority: 25.08.2010 GB 1014181
(71) Applicant: Meritor Heavy Vehicle Braking Systems (UK) Limited, Cwmbran, Gwent NP44 3XU (GB)
(72) Inventor: Grosdemouge, Thibaut, Cheltenham, Gloucestershire GL50 4HB (GB); Taylor, Martin, Newport, NP44 3ND (GB); Malki, Refaat, Bristol, BS8 4HA (GB)
(74) Representative: Foot, Paul Matthew James

(57) **Abstract**

A parking brake mechanism for an air actuated disc brake, the mechanism comprising an air chamber separated into a non-pressurised section and a pressurised section;
a resilient device located in the non-pressurised section and movable along an axis to adopt a retracted parking brake-off position and a deployed parking brake-on position, and being biased into the deployed position;
a latching device arranged to selectively retain the resilient device in the retracted position;
an actuator arranged to selectively disengage the latching device to permit the parking brake mechanism to be applied;
the mechanism being configured to introduce pressurised air into the pressurised section to return the resilient device to the retracted position

## Description

The present invention relates to a parking brake mechanism. More particularly, but not exclusively, the present invention relates to an electrically actuated parking brake mechanism for disc brakes or drum brakes having an air actuated service brake.

Various proposals have been put forward for utilising an electric motor to apply parking brakes, both on light passenger vehicles utilising hydraulic brake systems and heavy commercial vehicles that use air actuated service brakes.

Electric parking brakes have gone into commercial production for certain models of passenger cars, in which they essentially replace a cable linkage between a handbrake lever located in the passenger compartment and a disc or drum brake mounted in proximity to the rear wheels of a vehicle.

By contrast, despite various proposals being put forward for heavy vehicles brakes that are intended to replace a conventional spring brake on commercial vehicles, to the knowledge of the applicants, no electric parking brake has yet entered volume production for commercial vehicles. Conventional parking brake cylinders comprise a spring acting in a brake-on direction connected to a piston and push rod that is normally held in a parking brake-off position by pressurised air, but in which the air is vented to apply the parking brake. One disadvantage of this arrangement is that pneumatic control is required during parking brake application. This in turn means that a bulky pneumatic control valve is required in the vehicle cab on the dashboard, an air reservoir for the parking circuit and air hoses between the cab and parking actuators and anti-compounding valves to prevent overloading of the brake. Additionally, a failure in the air supply may cause the parking brake cylinders to become applied with no way for this to be controlled by the driver.

A number of hurdles need to be overcome to provide a practical electric parking brake that is specific to commercial vehicles. It is believed these have prevented adoption of this technology to date. One problem is that disc brakes used on commercial vehicles have significantly thicker discs and pads compared to light passenger vehicles, to enable the brakes to have a suitably long service life despite the increased energy that is dissipated during braking due to their increased vehicle weight. As a result, when a heavy commercial vehicle is parked when the brakes are hot, an appreciable shrinkage of those brake components, in particular the brake disc and brake pads, will occur. If this is not accounted for in some way by the parking brake mechanism, the clamp load applied by the parking brake will reduce as the brake components cool and contract and there is a reduced clamp load exerted by the pads on the brake disc that may cause the vehicle to roll away.

If used in conjunction with a drum brake on the other hand, the drum may contract as it cools and the reduction the drum diameter may damage components within the brake due to a lack of the compliance of such mechanisms.

Such a problem does not arise with conventional spring parking brake cylinders since the spring can extend by a certain amount with only a slight drop in clamp load.

However, parking brakes such as those disclosed in US6851761 (Knorr-Bremse) that are electrically powered are not provided with a similar resilient, extensible component, and it is therefore necessary either to apply an initial excess parking brake force to account for this shrinkage or to re-apply the parking brake once a certain amount of time has lapsed to bring the clamp load back up to the amount required. Neither of these solutions is particularly satisfactory, since in the former case an excess stress is placed on the brake components that may shorten their life and in the latter scenario, there is a danger that if electrical power is not available to drive the parking brake motor once the vehicle has been parked, a re-application of the parking brake will not be achieved and there is a risk that the vehicle will roll away.

A further problem with known electric parking brakes relates to their speed of application. In order to produce a parking brake having a sufficiently compact size, it is usual to propose the use of a relatively small electric motor and a reduction gear arrangement that results in a relatively low speed of application for the parking brake. In US6851761 a two-speed application arrangement is proposed, in order to attempt to overcome this problem. However, such arrangements are relatively complex.

The present invention seeks to overcome, or at least mitigate, the problems of the prior art.

Accordingly, one aspect of the present invention provides a parking brake mechanism for an air actuated disc brake, the mechanism comprising an air chamber separated into a non-pressurised section and a pressurised section;
a resilient device located in the non-pressurised section and movable along an axis to adopt a retracted parking brake-off position and a deployed parking brake-on position, and being biased into the deployed position;
a latching device arranged to selectively retain the resilient device in the retracted position; and
an actuator arranged to selectively disengage the latching device to permit the parking brake mechanism to be applied.

The mechanism is preferably configured to introduce pressurised air into the pressurised section to return the resilient device to the retracted position.

Preferred and optional features of the present invention are described in the dependent claims appended hereto.

A second aspect of the present invention provides a combination service and parking brake actuator comprising a single air inlet/outlet port, positioned such that in a parking brake-off position, the introduction of pressurised air via the port results in application of the service brake actuator, and in a parking brake-on position, the introduction of air via the port causes a retraction of the parking brake.

A third aspect of the present invention provides a method of applying a parking brake according to the first aspect of the present invention, comprising the step of signalling disengagement of the latching device to permit the resilient device to move from a parking brake-off to a parking brake-on position.

Embodiments of the present invention will be described, by way of example only, with reference to the accompanying drawings, in which:
FIGURE 1 is an isometric cross-sectional view through a brake actuator along the axial centreline A-A thereof and incorporating a parking brake mechanism according to a first embodiment of the present invention;
FIGURES 2 to 4 are cross-sectional views through the actuator of Figure 1 along the axial centreline thereof illustrating various states of the parking brake along a parking brake actuator;
FIGURE 5 is an isometric view of a brake mechanism according a second embodiment of the present invention along an axial centreline A-A thereof;
FIGURE 6 is a similar isometric view to Figure 5, but on a different axial plane;
FIGURE 7 is a view on the same axial plane as Figure 6, but with the parking brake in an applied condition;
FIGURE 8 is an exploded view of the parking brake mechanism of Figure 5;
FIGURES 9 to 12 illustrate various alternative actuation mechanisms for controlling application of the parking brake mechanism of Figures 1 and 5;
FIGURES 13 to 15 illustrate various arrangements for retracting the parking brake in the event of air supply failure;
FIGURES 16 and 17 a section exploded view of another embodiment of the present invention, similar to the Figure 6-8 embodiment, but employing a single parking brake spring; and
FIGURE 18 illustrates an alternative latching device.

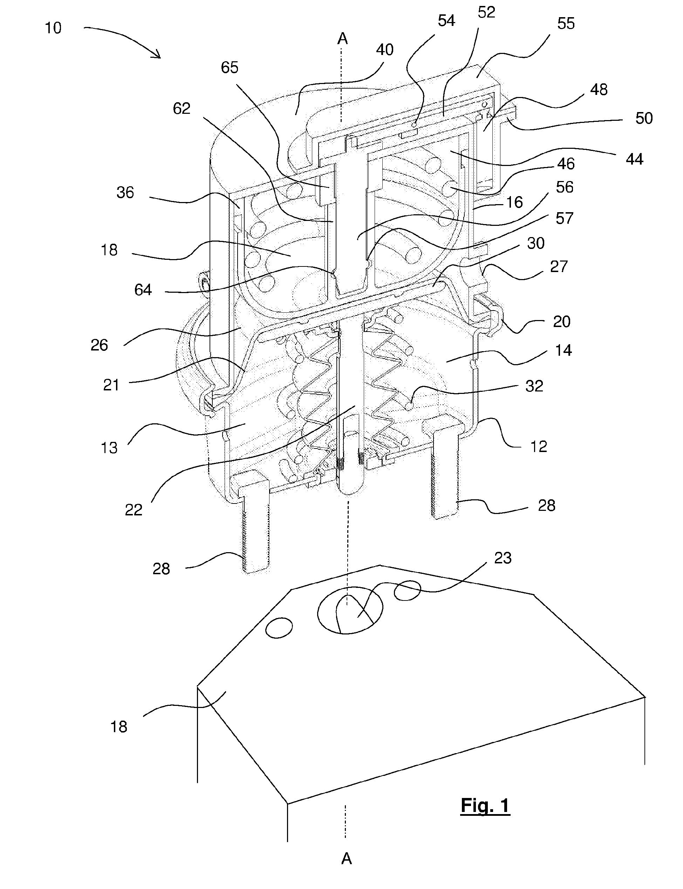

With reference to Figure 1, one half of a substantially cylindrical brake actuator 10 is shown in longitudinal cross-section about the central axis A-A of the actuator. The actuator 10 comprises a housing, which in this embodiment includes a first shell 12 that forms a non-pressurised section 14 of a service brake mechanism 13 and a second shell 16 that forms a pressurised section 26 of the service brake mechanism 13, and largely houses a parking brake mechanism 18.

The term "inboard" as used below denotes a direction towards a centreline of a vehicle to which the brake is fitted, whereas "outboard" refers to a direction away from the centreline along the axis A-A. It should be noted that the parking brake is on/applied when the parking brake mechanism is allowed to move outboard and is released/off when forced to retract inboard as described in more detail below.

The first and second shells 12 and 16 are held together by a clamp band arrangement 20 that engages corresponding lips on the shells, as is well known. In this embodiment, the clamp arrangement 20 also acts to sandwich a flexible diaphragm 21 between the lips and which is also connected to a service brake push-rod 22 so as to split the service brake mechanism 13 into the non-pressurised section 14 at the outboard side of the chamber (the side incorporating the free end of the push rod) as illustrated in Figure 1 and the pressurised section 26 in the inboard portion of the service brake mechanism 13 the other side of the diaphragm, as is well known in the art. However it should be noted that in this embodiment only a single port 27 is provided in the chamber, since it is only necessary to provide a single supply of air for service and parking functions. In addition, no anti-compounding valve upstream of the chamber is required, since there is no risk of service and parking brakes being simultaneously applied, thereby saving weight and cost of the overall parking brake system.

The first shell 12 further comprises two studs 28 to mount the actuator 10 to an inboard face of a known brake caliper 8, e.g. of the type disclosed in the applicant's earlier patent EP1000263 (see the third embodiment of Figure 19). The pushrod 22 is arranged to engage an operating shaft lever 23 within the brake caliper, as is known.

The push-rod 22 terminates at its inboard end with a pressure distribution disc 30 and is provided with a return spring 32 to return it to a service brake off condition when air is vented from pressurised section 26.

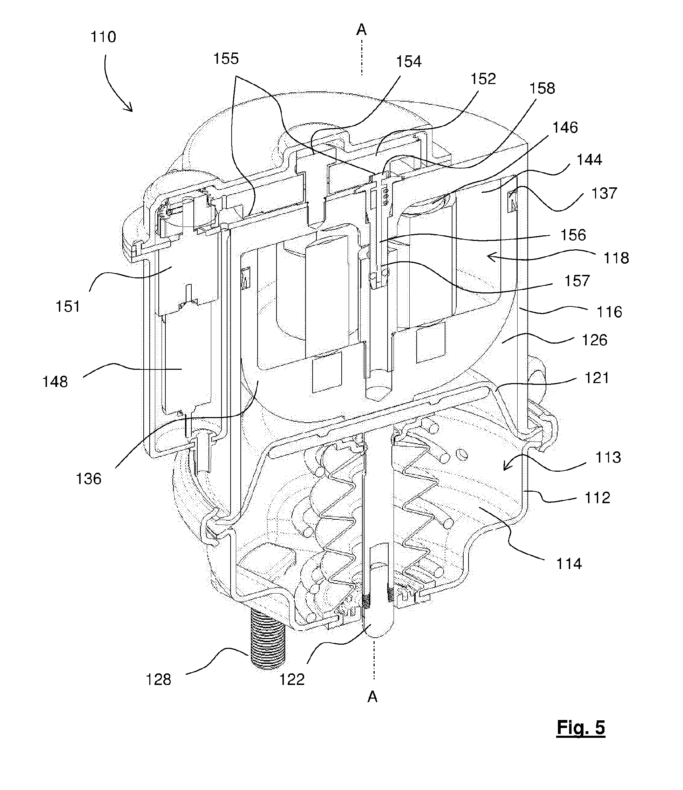

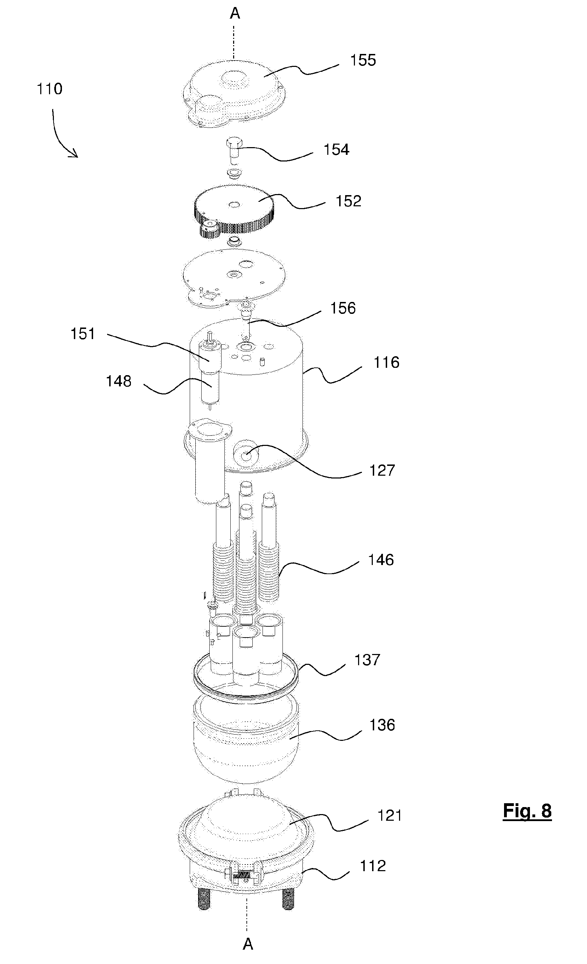

The parking brake mechanism 18 comprises a piston 36 that is sealed (see seal 137, Figs 5 and 8) in relation to the second shell 16 at its axially inboard end and may slide axially relative thereto. The piston 36 therefore also separates the parking brake mechanism 18 into a pressurised region that is contiguous with the pressurised section 26 of the service brake mechanism 13, and a non-pressurised region 44. The non-pressurised region is closed by an inboard end wall 40.

The piston 36 has a generally U shaped cross-section in which the substantially flat outboard face merges into a substantially cylindrical side wall portion in a curved manner to prevent the diaphragm 21 being trapped by the piston 36.

A cylindrical tube 62 extends from the inboard face of the piston 36, co-axially with the axis A-A and has an annular groove provided in the inner surface thereof near its connection to the piston for reasons described below.

The non-pressurised region 44 houses a resilient device in the form of a helical spring 46 that is supported at its inboard end by the wall 40 and its outboard end by the piston 36. The helical spring 46 is designed such that it urges the piston 36 in an outboard direction and can provide a sufficient force to apply the brake and hold a vehicle to which it is fitted (usually in conjunction with at least a further parking brake of this type on the other wheel end of the same axle).

A linear actuator 48, such as an electric motor for example is provided in a separate housing 50 to the side of the second shell 16 such that actuation occurs in a direction parallel to axis A-A. The motor is connected to a lever 52 that is mounted to pivot about a fulcrum 54 and extends radially across the end wall 40 to terminate in line with axis A-A. A cover plate 55 is provided on the inboard end of the second shell 16 to protect the lever 52.

The free end of the lever 52 drives a latching device 56. In this embodiment the latching device utilises a quick release type detent pin mechanism in which an inner member 158 (see Figure 5) is movable axially relative to an outer sleeve and has a cam surface that causes ball bearings (typically four) 57 to deploy and retract as a result of the axial motion. The inner pin is resiliently biased into the ball bearing deployed position. Such devices are available under the trade name Lockwell^{RTM} made by Southco of Concordville, PA, USA. Other known latching mechanisms having radially deployable detents may also be used

The latching device/quick release pin 56 extends outboard through the end wall 40 and into the tube 62 where it is a close fit and the ball bearings 57 are received in the recess 64. A threaded collar 65 is located on the outboard face of the wall 40 such that it is axially intermediate the wall and the cylindrical tube 62. The collar 65 receives and retains the quick release pin 56.

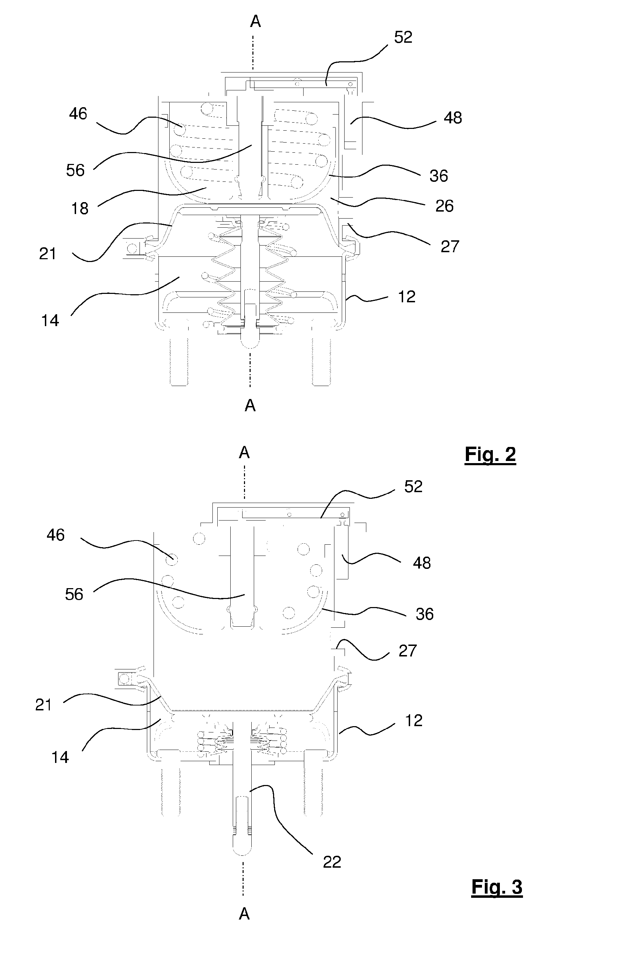

Figures 1 and 2 show the brake actuator 10 in a parking brake off and service brake off condition. The parking brake 18 is off because the ball bearings 57 of the quick release pin 56 are engaged with the recess 64 in the cylinder, holding the piston 36 in a retracted position against the bias of the spring 46.

As no pressurised air has been introduced into the pressurised section 26, the service brake is not applied.
Figure 3 illustrates a service brake application. Air has been introduced via port 27, forcing the diaphragm 21 and pushrod 22 outboard to actuate the op-shaft 23.

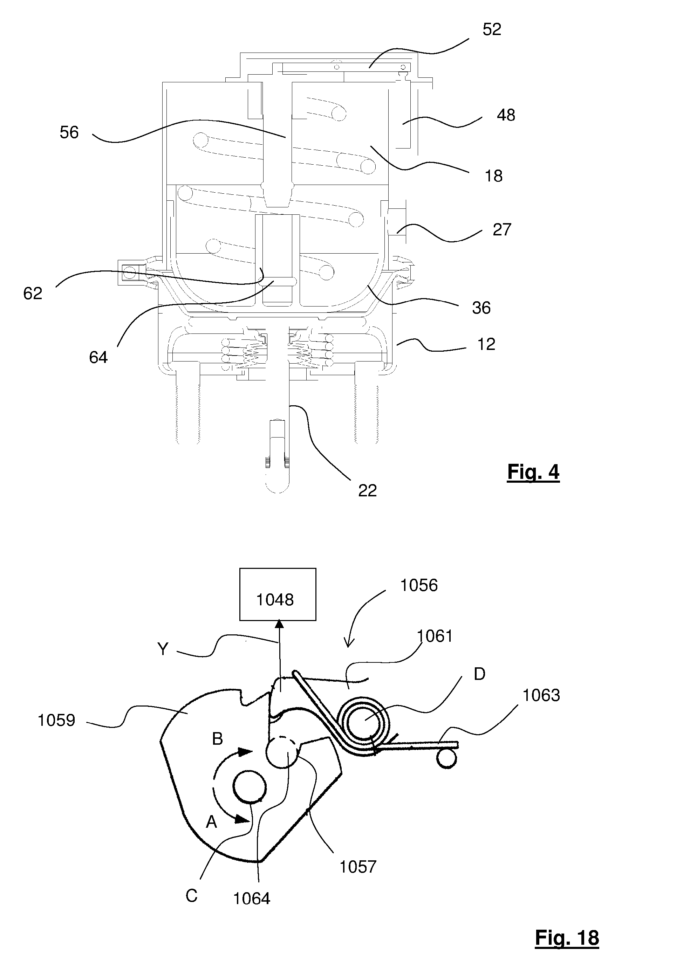

Figure 4 illustrates a parking brake application. In this instance, starting from the Figure 2 condition, the linear actuator 48 is actuated, pivoting the lever 52 and axially moving the inner member of the quick release pin 56 to retract the ball bearings 57 and release the piston 36. The piston then pushes the diaphragm 21 and pushrod 22 outboard under the influence of the spring 46 to apply the parking brake.

As is often the case, the parking brake is applied when the brake disc and other brake components are hot due to energy dissipated as heat by previous service brake applications as the heavy vehicle is operated. As the disc and other brake components cool back to ambient temperature whilst the heavy vehicle is parked, it is inevitable that the disc and pads contract. In order to prevent the heavy vehicle from rolling away if parked on a slope, it is necessary to maintain a certain level of clamp load despite this contraction.

It can be appreciated that in such a situation the helical spring 46 extends and relaxes, thus causing the piston 36 to shift outboard as the disc and pads cool and contract. However, the preload on the spring means that despite this relaxation, it is able to continue to apply a high force through the parking brake mechanism such that a necessary clamp load is applied by the parking brake even after the disc and other brake components have cooled to ambient temperatures.

To release the parking brake, compressed air is introduced into the pressurised section 26 via port 27 until the force of the spring 46 is overcome and the piston is returned to the retracted position of Figures 1 and 2. At or prior to this point, the ball bearings 57 are redeployed to retain the piston 36 under the action of the return spring built into the quick release pin and the pressurised air may be vented to return the service brake mechanism. It should be noted that this retention is automatic and does not require electronic control.

Therefore it will be appreciated that the use of the helical spring 46 means that contraction of the brake disc and other brake components may be compensated for whilst the vehicle is standing with the parking brake mechanism applied. As a result, on the one hand the risk of the vehicle rolling away due to a reduced clamp load is minimised, whilst at the same time excess loadings do not need to be applied to the brake to account for such contractions and therefore fatigue on components may be reduced.

One advantage of the quick release pin 56 is that a relatively low force is required to retract the ball bearings 57 even though they are themselves restraining a relatively high force from the spring 46, meaning a low power actuator 48 is required. Furthermore, no energy is required to retain the piston 36 in its retracted position, since no energy is required to maintain the ball bearings 57 in the deployed position. Actuation of the parking brake mechanism is fast once the ball bearings are retracted. Finally, by locating the actuator 48 external to the main body of the cylinder, it may be orientated at any desired angle with respect to the brake caliper 8 to ensure that its packaging can be optimised for a wide variety of vehicle configurations.

Figures 5, 6 and 7 illustrate a second embodiment of the present invention in which like parts have been denoted by like numerals but with the addition of the prefix "1". Only differences with respect to the actuator of the first embodiment are discussed in detail below.

The actuator 110 of the second embodiment functions using similar principles to the actuator shown in Figure 1 and the various operation sequences shown in Figures 2 to 4 are similar. However, the parking brake mechanism 118 of the second embodiment comprises four separate helical springs 146 in place of the single spring 46 of first embodiment and the linear actuator 48 is replaced by an electric motor 148. The service brake mechanism 113 and pushrod 122 are located in the non-pressurised section 114 of the first shell 112 as described above. The diaphragm 121 separates the pressurised section 126 from the non-pressurised section 114. Studs 128 mount the actuator 110 as described above. This configuration also utilised a single port 127.

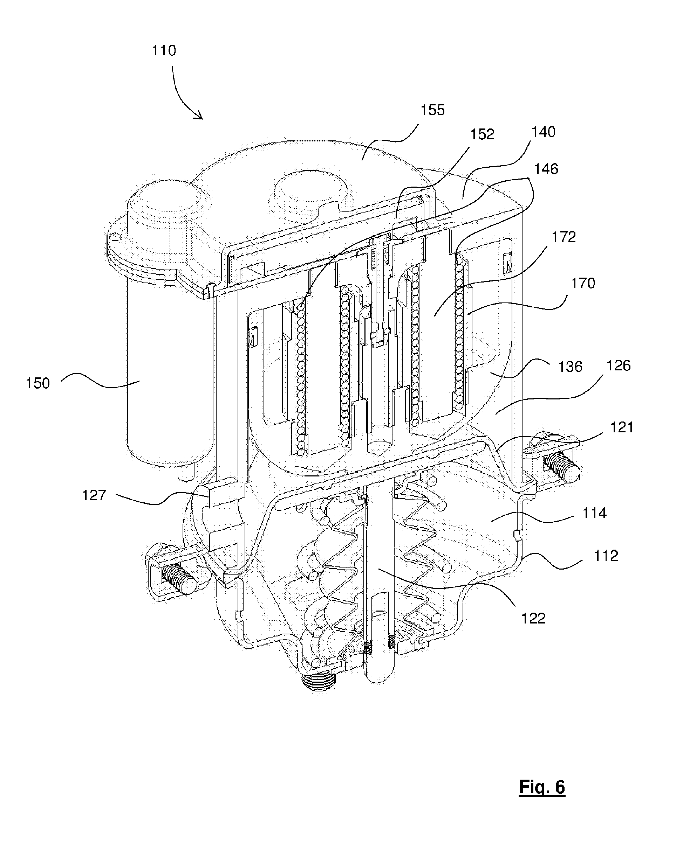

As best seen in Figure 6, each of the four springs 146 is guided by an outer shroud 170 fixed to the piston 136 and an inner rod 172 secured to the end wall 140. The springs 146 are located in the non-pressurised region 144.

The motor 148 is in the housing 150 and drives a reduction gearing 151 and a cam gear 152 that is mounted to the inboard face of the inboard wall 140 about an axle 154 offset from the main axis A-A of the actuator.

The cam gear 152 has a cam surface 155 arranged in a circle on the outboard face of the gear whose depth varies to form a shallow helix and which is arranged to receive an inner portion 158 of the quick release pin 156, such that rotation of the cam gear causes the inner portion 158 to depress and retract the ball bearings 157, instead of release being effected by the lever arrangement of the first embodiment.

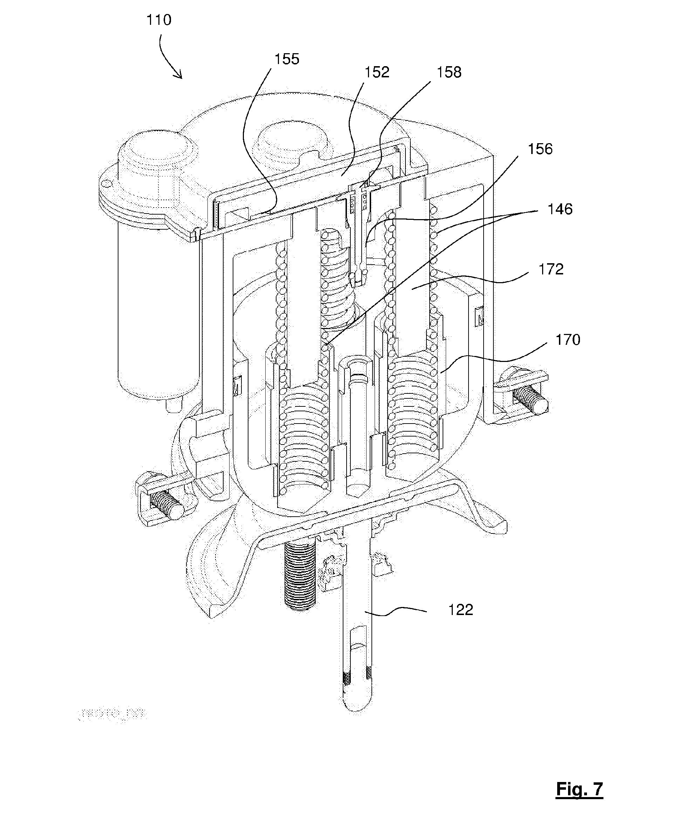

Otherwise, operation of the parking brake mechanism 118 is similar to that of the first embodiment and Figure 7 illustrates the parking brake in an applied state after release of the quick release pin 156.

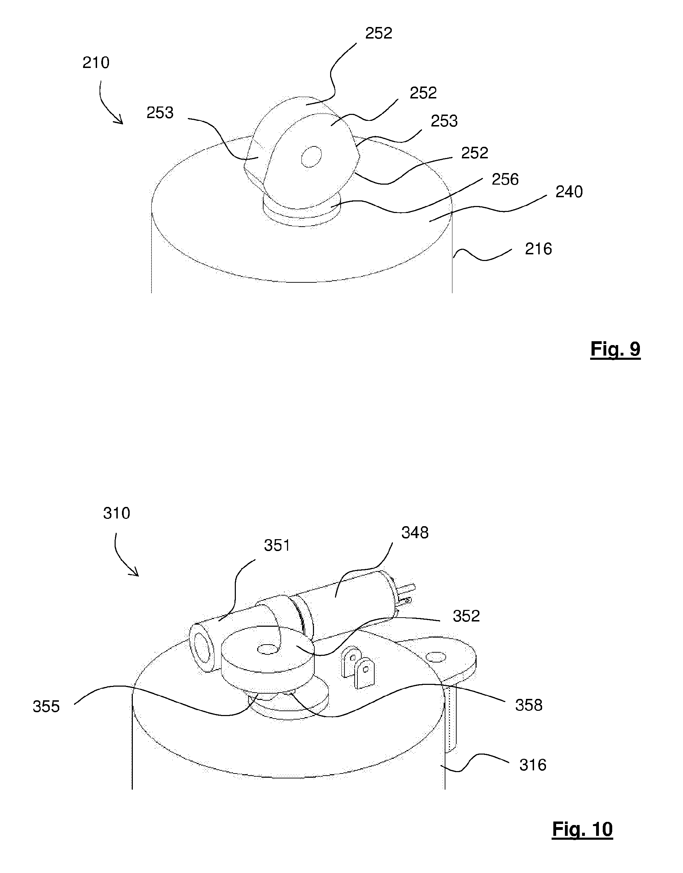

Figures 9, 10, 11, and 12 illustrate further alternative actuation mechanisms for parking brakes of either the first or second embodiments of the present invention.
Figure 9 shows an actuator 210 with a cam 252 associated with the second shell 216 arranged to rotate about an axis transverse axis to A-A having a first sector 252' having a first radius and a second sector 252" having a second, greater radius. The sectors are connected by ramps 253 Rotation of the second sector 252" into contact with the head of the inner portion 158 (not visible in Fig 9) of the pin 216 by an electric motor (not shown) depresses the inner portion into end wall 240 and retracts the ball bearings to apply the parking brake mechanism 118.

In Figure 10 an actuator 310 includes an electric motor 348 associated with the second shell 316 and which drives a worm 351. The worm 351 rotates a gear 352 which is offset from axis A-A and which has a cam surface 355 on the outboard face thereof arranged to selectively depress the inner portion 358.

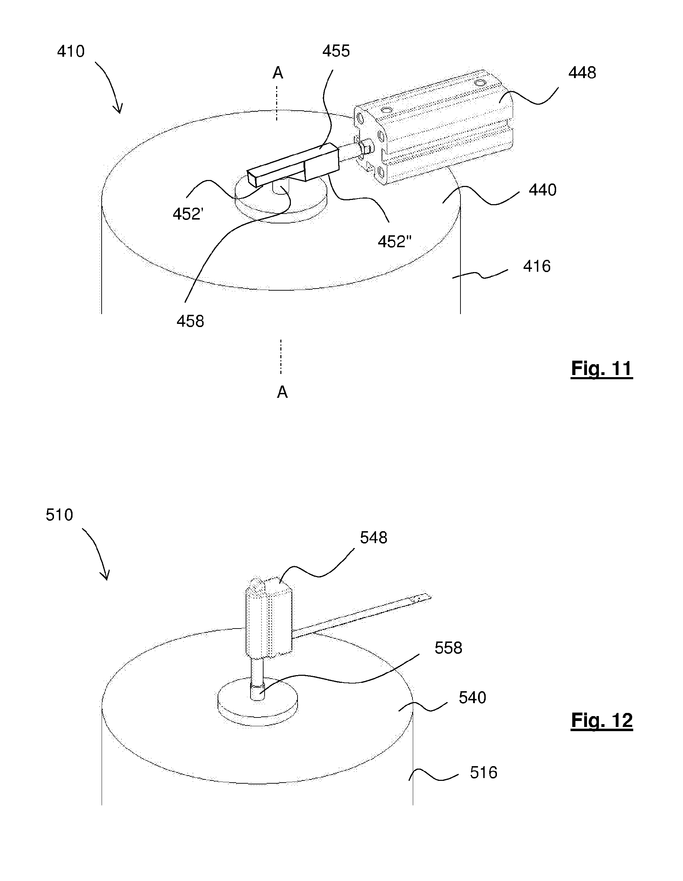

In Figure 11, an actuator 410 includes an air actuated cylinder 448 that drives a linear cam 455 having a first higher surface 452' and a second lower surface 452" and a ramp 453 therebetween. When the actuator 410 is extended the ramp 453 depresses the head of the inner portion 458 downward through the end wall 440 and into the second shell 416 to apply the parking brake mechanism.

In Figure 12, an actuator 510 includes a linear actuator 548 is arranged with its line of action aligned with axis A-A to directly depress the head of the inner portion 558 inward through the end wall 540. In alternative embodiments a cable pull may enable a motor or actuator positioned remotely to retract the ball bearings.

In the above described embodiments, depressing the inner portion of the quick release pin retracts the ball bearings to enable the parking brake to be applied. In other embodiments lifting the inner portion may instead retract the ball bearings.

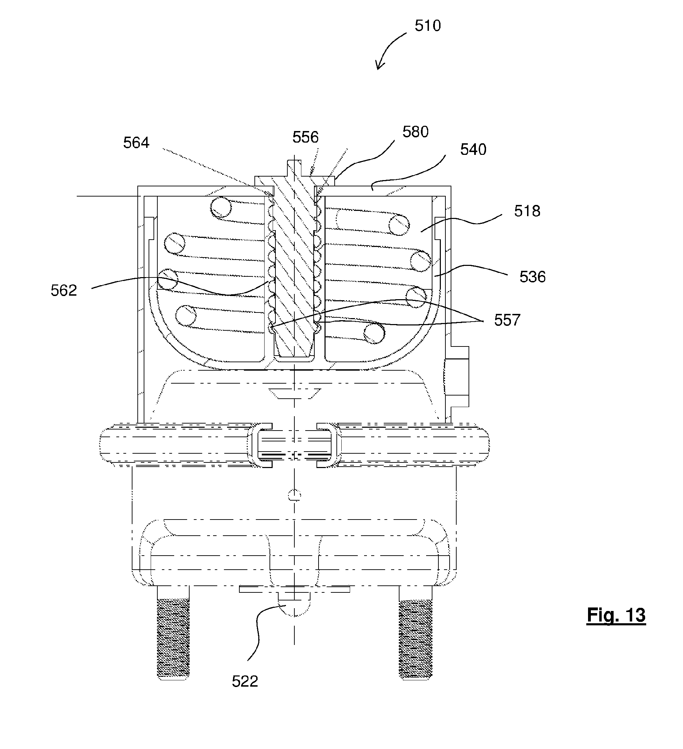

If the compressed air supply fails with the parking brake on, it is desirable to disengage the parking brake mechanism so the vehicle to which it is fitted can be recovered and repaired. Figures 13, 14, and 15 show three embodiments of parking brake spring wind-off arrangements.

In Figure 13 the quick release pin 556 is adapted from the versions of the preceding embodiments by incorporation of a ratchet hex drive 580 in a collar portion thereof. In addition the tube 562 replaces the single circular recess 64 by a four-start thread 564 extending down into the tube from the open end thereof, the thread being dimensioned to receive the ball bearings, and having a pitch of e.g. 30° such that it is self-locking.

With the parking brake mechanism on (the Figure 4 state), the ball bearings are located in the threads near the open end of the tube. Once the quick release pin actuation mechanism has been removed, service personnel may rotate the entire quick release pin using a using a suitable spanner/wrench, thereby "pulling" the piston back towards the inboard end wall 540 to the position shown in Figure 13. The pushrod 522 will also move inboard under the influence of the return spring (32, Fig 1). An anti-rotation feature, such as a key and keyway (not shown) on the cylinder and piston respectively (not shown) is provided.

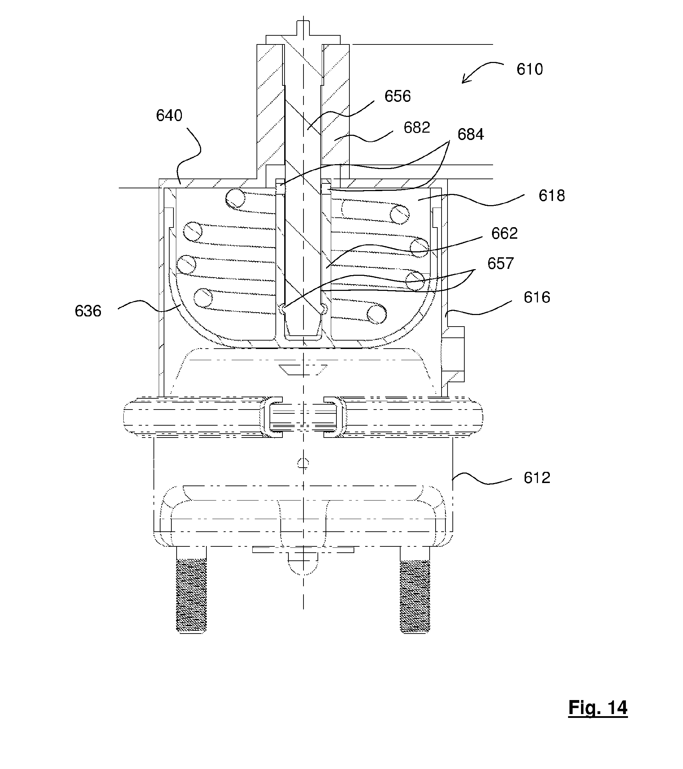

In Figure 14, an actuator 610 includes a longer quick release pin 656 in the second shell 616, which protrudes inboard from the inboard wall 640. The first shell 612 is attached to the second shell 616 as described above. An internally threaded boss 682 surrounds the protruding portion of the pin 656, which has a complementary external thread. Holes 684 are provided proximate the open end of the tube 662 to receive the ball bearings 657 when the parking brake mechanism 618 is applied. Release of the parking brake mechanism is again effected by rotating the quick release pin, which moves inboard due to the threads, and moves the piston 636 with it.

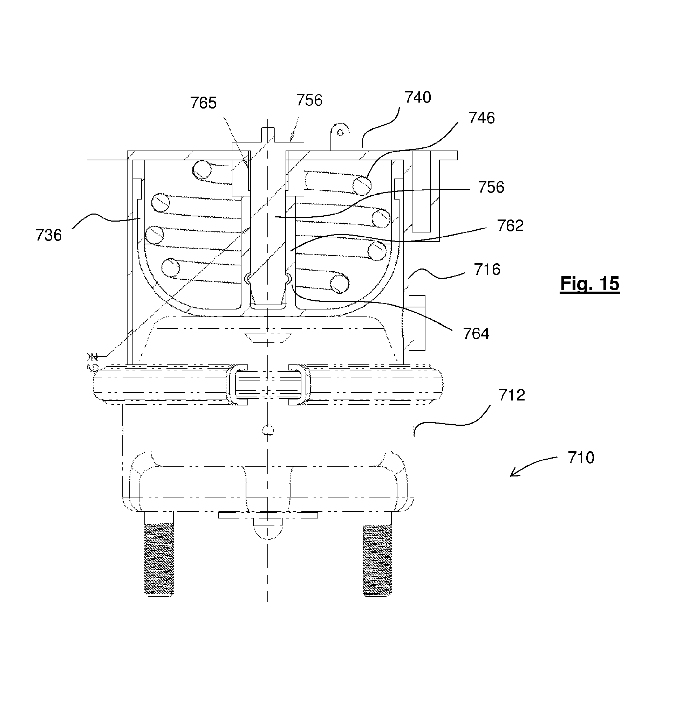

In the embodiment of Figure 15, an actuator 710 includes an internal thread in the tube 762 in addition to the recess 764. The spring 746 is positioned in the piston 736 as described above. This thread has a smaller diameter than the thread of the collar 765. In this embodiment the piston 736 located in the second shell 716 is retracted inboard by removing the quick release pin 756 and screwing in an extraction bolt (not shown) in its place that has threads that mate with the internal threads of the tube 762. A head portion of the pin 756 extends out from the inboard end wall 740. The second shell 716 is attached to the first shell 712 as described above.

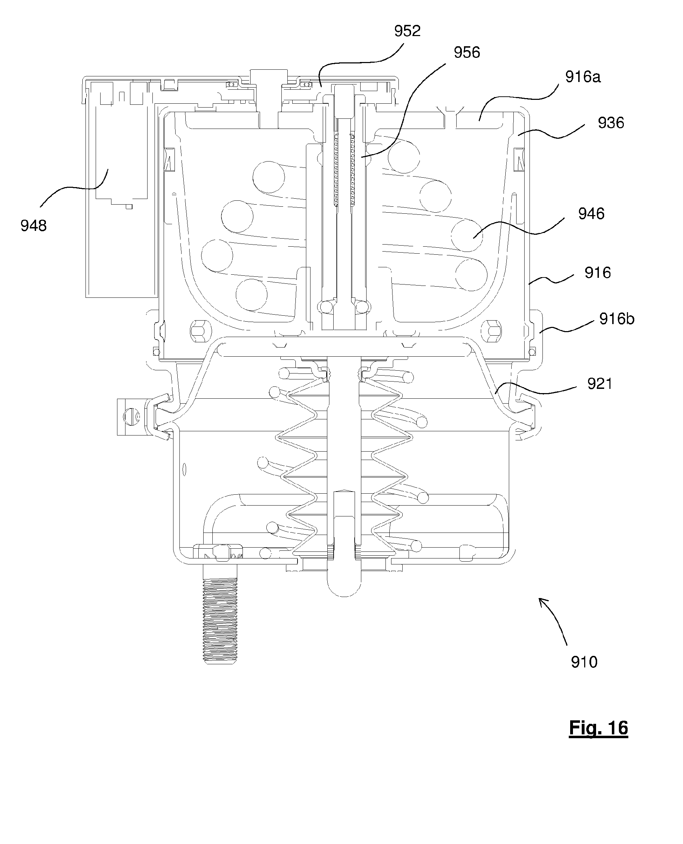

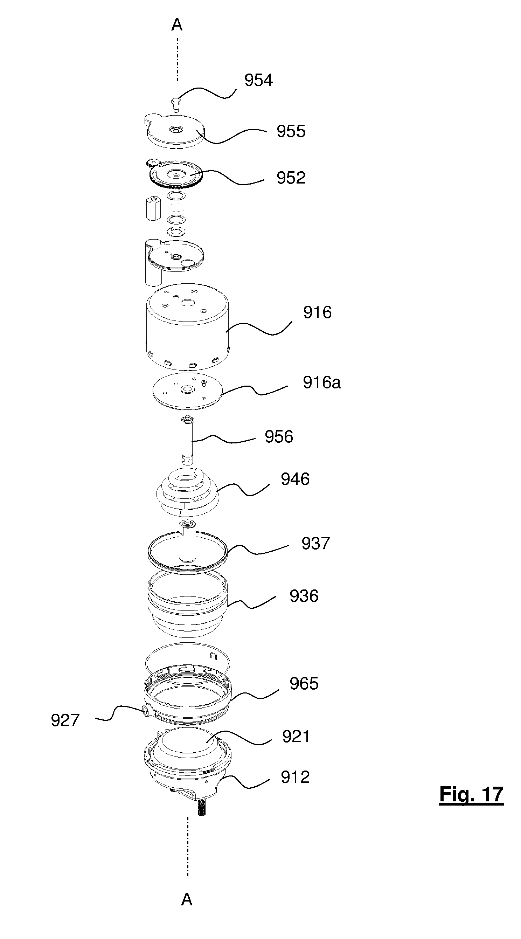

Figures 16 and 17 illustrate a further embodiment of the present invention which is similar to the second embodiment of Figures 5, 6 and 7 and in which like components are labelled with like numerals with the addition of the prefix 9. This embodiment differs primarily in that the four springs 146 of the second embodiment are replaced by a single larger helical spring 946. The piston 936 includes seat 937 as described above.

In addition, with this actuator 910, the quick release pin 956 is more closely integrated into the second shell 916. The shell itself is in this embodiment a largely pressed steel component, having a strengthened plate 916a provided at the inboard end to mount the actuator 948 and cam gear 952 with cam surfaces 955 are mounted. A collar 916b is attached to the outboard end having a suitable profile for clamping the diaphragm 921 between the first 912 and second 916 shells. The part 927 is associated with the collar 916b.

Figure 18 illustrates an alternative latching device 1056 in the form of a rotatable claw 1059 and pawl 1061 arrangement mounted the outboard face of wall 40 (see Fig. 1) in place of the quick release pin. The claw 1059 includes a mouth 1057 to receive a hoop-type striker 1064 secured to the inboard face of the piston 36. As illustrated in Figure 18, the pawl 1061 and claw 1059 are resiliently biased in opposing directions by springs (only pawl spring 1063 shown), are pivotable about axes C and D extending transverse A-A, and are shown with the pawl retaining the claw, by engaging a detent form in the mouth 1057 to hold the parking brake mechanism in a brakes-off condition. The latching device is disengaged when an actuator lifts the pawl 1061 in direction Y, allowing the claw to rotate in direction B to free the striker 1064. When the piston 36 is moved back to the brakes-off condition, contact between the striker 1064 and the mouth 1057 causes the claw 1059 to rotate in the opposite direction A and the pawl 1061 to self re-engage with the mouth.

It should be appreciated that terms such as inner and outer, inboard and outboard, upper and lower should not be regarded as limiting and that the position of components may be adjusted as required.

It should be appreciated that numerous changes may be made within the scope of the present invention. For example, the reduction gear arrangements may be replaced by suitable alternative types of reduction gearing, the helical spring may be replaced by other resilient components such as a stack of Belleville washers, the quick release pin arrangement may be replaced with other latching arrangements such as other devices having radially extendible teeth, a bayonet arrangement rotatable about axis A-A, clamping devices or collet arrangements similar to those of our earlier patent application, EP1596090. The parking brake mechanism may be adapted for use with an electrically actuated service brake. The parking brake may also be used in conjunction with drum brakes as well as disc brakes. A second diaphragm may be used instead of a piston for the parking brake. The actuating mechanism for the latching device may be located within the main housing (e.g. as a solenoid surrounding the quick release pin.

## Claims

1. A parking brake mechanism for an air actuated disc brake, the mechanism comprising an air chamber separated into a non-pressurised section and a pressurised section;
a resilient device located in the non-pressurised section and movable along an axis to adopt a retracted parking brake-off position and a deployed parking brake-on position, and being biased into the deployed position;
a latching device arranged to selectively retain the resilient device in the retracted position;
an actuator arranged to selectively disengage the latching device to permit the parking brake mechanism to be applied;
the mechanism being configured to introduce pressurised air into the pressurised section to return the resilient device to the retracted position

2. A parking brake mechanism according to claim 1 wherein the latching device extends radially to retain the resilient device.

3. A parking brake mechanism according to claim 2 wherein the latching device converts an axial input into the radial extension.

4. A parking brake mechanism according to claim 2 wherein the latching device is a quick release pin type device.

5. A parking brake mechanism according to claim 1 wherein the latching device rotates to retain the resilient device, preferably wherein the latching device rotates about the axis to retain the resilient device or preferably wherein the latching device rotates transverse the axis to retain the resilient device and preferably or alternatively wherein the latching device comprises a rotatable claw against which a pawl may self-engage to retain the resilient device.

6. A parking brake mechanism according to any preceding claim wherein the latching device latches a piston drivable by the resilient device, preferably wherein the piston comprises a formation with which the latching device may interengage.

7. A parking brake mechanism according to any preceding claim further comprising a service brake mechanism, preferably wherein the pressurised section is operable when air is introduced therein to apply the service brake mechanism, and preferably or alternatively wherein deployment of the resilient device drives the service brake mechanism to apply the brake.

8. A parking brake mechanism according to any preceding claim wherein the latching device is located concentrically within the resilient device.

9. A parking brake mechanism according to any preceding claim wherein the actuator for the latching device is a linear actuator.

10. A parking brake mechanism according to any one of Claims 1 to 8 wherein the actuator for the latching device is a rotary actuator.

11. A parking brake mechanism according to any preceding claim wherein the actuator is offset with respect to the latching device, or alternatively wherein the actuator is axially aligned with respect to the latching device, or alternatively wherein the actuator extends transverse the line of action of the latching device.

12. A parking brake mechanism according to any preceding claim wherein the latching mechanism is configured to enable retraction of the parking brake mechanism in the event of a failure of air supply.

13. A combination service and parking brake actuator incorporating a mechanism according to any preceding claim.

14. A combination service and parking brake actuator comprising a single air inlet/outlet port, positioned such that in a parking brake-off position, the introduction of pressurised air via the port results in application of the service brake actuator, and in a parking brake-on position, the introduction of air via the port causes a retraction of the parking brake.

15. A method of applying a parking brake mechanism according to any one of claims 1 to 12, comprising the step of signalling disengagement of the latching device to permit the resilient device to move from a parking brake-off to a parking brake-on position.
